# EUROPÄISCHE PATENTSCHRIFT

(11) **EP 1 221 341 B1**
(45) Veröffentlichungstag und Bekanntmachung des Hinweises auf die Patenterteilung: **23.11.2005**
(21) Anmeldenummer: 01125832.4
(22) Anmeldetag: 30.10.2001
(51) Int. Cl.: B01L 3/02, G01N 35/10, G01F 25/00, G01F 17/00

(54) **Verfahren und Vorrichtung zur Bestimmung des Volumens einer Flüssigkeitsprobe**
Method and device for the determination of the volume of a liquid sample
Méthode et dispositif pour la détermination du volume d'un échantillon liquide

(30) Priorität: 17.11.2000 CH 22522000; 23.11.2000 CH 22812000
(43) Veröffentlichungstag der Anmeldung: 10.07.2002
(73) Patentinhaber: Tecan Trading AG, 8708 Männedorf (CH)
(72) Erfinder: Hälg, Werner, 8708 Männedorf (CH); Ingenhoven, Nikolaus, 8708 Männedorf (CH); Trösch, Michael, 8634 Hombrechtikon (CH)
(74) Vertreter: OK pat AG

(56) Entgegenhaltungen:
- EP-A- 0 431 578
- WO-A-95/02166
- US-A- 4 354 376

## Beschreibung

Die Erfindung betrifft - gemäss dem Oberbegriff des unabhängigen Anspruchs 1- ein Verfahren zur Bestimmung des Volumens einer Probe einer Flüssigkeit (A), bei dem - zum Anfärben der Flüssigkeit (A) - eine bestimmte Konzentration eines chromophoren Indikators in dieser Flüssigkeit (A) erstellt, eine Probe von der Flüssigkeit (A) abgetrennt, die optische Absorption der abgetrennten Probe gemessen und das Volumen der abgetrennten Probe durch Korrelation der gemessenen optischen Absorption mit der Konzentration des Indikators in dieser Flüssigkeit (A) bestimmt wird.

Es ist bekannt, dass Tropfen mit einem Volumen von mehr als 10 µl sehr einfach aus die Luft abgegeben werden können, weil die Tropfen bei korrektem Umgang mit der Pipette von selbst die Pipettenspitze verlassen. Die Tropfengrösse wird dann durch die physikalischen Eigenschaften der Probenflüssigkeit, wie Oberflächenspannung oder Viskosität bestimmt. Die Tropfengrösse limitiert somit die Auflösung der abzugebenden Menge Flüssigkeit. Die Aufnahme und Abgabe, d.h. das Pipettieren von Flüssigkeitsproben mit einem Volumen von weniger als 10 µl verlangt dagegen meist Instrumente und Techniken, welche die Abgabe solch kleiner Proben garantieren.

Das Abgeben einer Flüssigkeit mit einer Pipettenspitze, d.h. mit dem Endstück einer Vorrichtung zur Abgabe bzw. Aufnahme/Abgabe von Flüssigkeitsproben kann aus der Luft ("from Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich - zu empfehlen, damit eine gleichmässige Verteilung des Probenvolumens in einem Diluent gewährleistet ist.

Systeme zum Abtrennen von Proben aus einer Flüssigkeit sind als Pipettierautomaten bekannt. Solche Systeme dienen z.B. zur Abgabe von Flüssigkeiten in die Aufnahmetöpfchen von Standard-Mikrotiterplatten™ (Handelsmarke von Beckman Coulter, Inc., 4300 N. Harbour Blvd., P.O.Box 3100 Fullerton, CA, USA 92834) bzw. Mikroplatten mit 96 Töpfchen. Die Reduktion der Probenvolumina (z.B. zum Befüllen von hochdichten Mikroplatten mit 384, 864, 1536 oder noch mehr Töpfchen) spielt eine zunehmend wichtige Rolle, wobei der Genauigkeit des abgegebenen Probenvolumens grosse Bedeutung zukommt. Die Erhöhung der Probenzahl bedingt meistens auch eine Versuchsminiaturisierung, so dass die Verwendung eines Pipettierautomaten unumgänglich wird und spezielle Anforderungen an die Genauigkeit von Probenvolumen sowie die Zielsicherheit der Bewegungsführung bzw. des Dispenses dieses Pipettierautomaten gestellt werden müssen.

Wegwerfspitzen reduzieren wesentlich die Gefahr eines ungewollten Übertragens von Probenteilen (Kontamination). Bekannt sind einfache Wegwerfspitzen (sogenannte "Air-Displacement Tips"), deren Geometrie und Material für das genaue Aufnehmen und/oder Abgeben von sehr kleinen Volumina optimiert ist. Die Verwendung von sogenannten "Positive-Displacement Tips", welche an ihrer Innenseite einen Pumpkolben aufweisen, ist ebenfalls bekannt.

Zum Automatisieren müssen zwei Vorgänge voneinander unterschieden werden: Die definierte Aufnahme (Aspiration) und die anschliessende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort verschieden ist. Für die Genauigkeit einer Abgabe bzw. Aufnahme/Abgabe ist nur das Flüssigkeitssystem wesentlich, welches aus Pumpe (z.B. ein als Spritzenpumpe ausgebildeter Diluter), Flüssigkeitsleitung und Endstück (Pipettenspitze) besteht.

Die Richtigkeit (ACC = Accuracy) und Reproduzierbarkeit (CV = Coefficient of Variation) der Abgabe bzw. Aufnahme/Abgabe einer Flüssigkeitsprobe kann durch verschiedenste Parameter beeinflusst werden. Die Geschwindigkeit der Dispensierung bestimmt z.B. weitgehend die Art des Abreissens des Tropfens von der Pipettenspitze.

Beim Pipettieren werden zwei grundsätzliche Modi unterschieden: Single Pipetting und Multi Pipetting. Beim Single Pipetting Modus wird eine Flüssigkeitsprobe aspiriert und an einem anderen Ort dispensiert. Beim Multi Pipetting Modus wird einmal ein grösseres Flüssigkeitsvolumen aspiriert und anschliessend in mehreren - meist äquivalenten - Portionen (Aliquots) an einem oder mehreren verschieden Orten z.B. in verschiedene Aufnahmetöpfchen einer Standard-Mikrotiterplatte™ dispensiert.

Das Messen des aktuellen Volumens einer Flüssigkeitsprobe nimmt aber keine Rücksicht auf die Art und Weise, wie ein Tropfen abgetrennt wurde: In Europa liegt die Norm ISO/DIS 8655-1 der International Organization for Standardization (ISO) mit Sitz in Genf, Schweiz, zumindest im Entwurf seit 1990 vor. Diese Norm definiert die Rahmenbedingungen zum Durchführen von Laborarbeiten mit Dispensiervorrichtungen, wie Pipetten, Dispensern und Büretten. Bekannte nationale Normen, wie ASTM (USA), British Standard (GB) oder der neueste Entwurf DIN 12650 (Deutschland) müssen sich in das Netz der ISO-Norm ISO/DIS 8655-1 einfügen.

Die Norm DIN 12650 unterscheidet in ihrem 4. Entwurf von 1996 im wesentlichen zwei Verfahrenskategorien zum Testen der Messgenauigkeit von Dispensern. Es sind dies gravimetrische und nicht-gravimetrische Methoden. Weil nicht jedes Labor über genügend ruhige Wägestationen und über teure Waagen mit der nötigen Auflösung (sechs Dezimalstellen) zum Durchführen von gravimetrischen Messungen verfügt, werden von der Industrie (z.B. Firma EPPENDORF AG, Barkhausenweg 1, D-22339 Hamburg, Deutschland) fotometrische Tests für Handpipetten, z.B. für den Bereich der Probenvolumina von 0.2 bis 1 µl angeboten.

Eine weitere Methode ist aus dem Aufsatz "Performance Verification of Small Volume Mechanical Action Pipettes" von Richard H. Curtis [Cal.Lab, May/June 1996] bekannt. Im Bewusstsein der Schwierigkeiten (z.B. Verdampfung, Vibrationen, statische Aufladung der Proben) der Anwendung von gravimetrischen Methoden auf eine Flüssigkeitsprobe im Mikroliter-Bereich wird dort ein integriertes System vorgeschlagen, welches auf der Verwendung von colorimetrischen Substanzen beruht. Allerdings muss vorausgesetzt werden, dass die Konzentration einer Indikatorsubstanz, deren optische Dichte gemessen werden soll, genau bekannt ist. Diese optische Dichte - im englischen Sprachgebrauch als "Optical Density" (OD) bezeichnete Grösse - errechnet sich aus log₁₀(¹/T), wobei T als Transmissionsgrad (engl. "Transmittance") bezeichnet wird. Diese Transmission entspricht ^{I}/Iₒ, d.h. dem Verhältnis von Ausgangsintensität und Eingangsintensität von die Probe durchdringenden Lichtstrahlen. Des Weiteren muss das Gerät zur Messung der optischen Dichte ebenfalls den internationalen Normen genügen. Ausserdem müssen Probleme, wie eine Abhängigkeit der Messung von der Probentemperatur, Veränderungserscheinungen in der Testlösung und Abnützungserscheinungen in der Messküvette in Betracht gezogen werden. Die Firma ARTEL Inc. 25 Bradley Drive Westbrook, Maine, USA, produziert dieses "Artel PCS™ Pipette Calibration System" genannte, gattungsgemässe System. Es besteht im wesentlichen aus einem vorabgefüllten, verschlossenen Testglas mit 4.75 ml einer genau definierten Konzentration einer Kupferchlorid-Lösung und einem Instrument zum Messen der optischen Absorption (A = optische Absorption = ^{Io}/_{I} = ¹/_{T}) dieser Lösung bei einer Wellenlänge von 730 nm. Das Testglas wird in das Instrument eingesetzt und bleibt dort während des ganzen Kalibrationsverfahrens. Der Experimentator öffnet den Deckel des Testglases und gibt mit der zu kontrollierenden Pipette eine der gewünschten Messgenauigkeit entsprechende Probe in das Testglas, worauf er den Deckel wieder verschliesst. Die zugegebene Probe ist eine Lösung von "Ponceau S", einer organischen Testsubstanz, welche unter anderem wegen ihrer Langzeitstabilität und guten "Pipettierbarkeit" (ähnlich wie Wasser, selbst in hohen Konzentrationen) und ihres breiten, gut definierten AbsorptionsPeaks bei 520 nm ausgewählt wurde. Die Absorptionspeaks der Kupferchlorid-Lösung und der Testlösung "Ponceau S" überlappen sich nicht. Die Testlösung enthält zudem Biozide, um das Wachstum von Mikroorganismen zu verhindern sowie einen pH-stabilisierenden Puffer. Das Gerät mischt die beiden Lösungen mit einem eingebauten Mischer und bestimmt die Absorption bei 520 nm (Ponceau S) und bei 730 nm (Kupferchlorid). Auf der Basis dieser beiden Messwerte und den bekannten Ausgangskonzentrationen wird dann das Volumen der zugegebenen Probe errechnet. Obwohl dieses System den Vorteil hat, dass die Messung der optischen Absorption unabhängig von der Weglänge und von Unregelmässigkeiten im Testglas ermöglicht wird, so hat es doch den Nachteil, dass es nicht mit einem sinnvollen Aufwand für die Anwendung in einem Mehrkanal-Pipettier-Automaten adaptiert werden kann.

Ein weiteres gattungsgemässes Kalibrierverfahren verwendet als Testsubstanz "Orange G", das eine Absorptions-Messung mit hoher Empfindlichkeit erlaubt. Nachteilig ist aber hier, dass die flachen Moleküle dieser Testsubstanz eine hohe Adhäsion an die Innenwände der Pipettenspitze bzw. an den "Tubings" (Schläuchen), "Troughs" (Tröge bzw. Behälter aus denen aspiriert wird) und/oder Flüssigkeitstöpfchen von Mikroplatten aufweisen. Dadurch findet eine unkontrollierbare Reduktion der Orange G - Konzentration in der Testflüssigkeit statt, was die Zuverlässigkeit des Tests in Frage stellt.

Ein ebenfalls gattungsgemässes Verfahren ist aus BE 761 537 bekannt, welches die automatische Analyse von verschiedenen Substanzen mit erhöhter Genauigkeit, insbesondere die automatische Analyse, welche vom Probenvolumen der Substanz abhängt, offenbart. Gemäss dieser Erfindung mischt man Chrom in der Form von Cr₂(SO₄)₃·10 H₂O als Indikator in eine Probe, um darin eine bestimmte Konzentration von Chrom(III) zu erhalten. Anhand der gemessenen Chrom(III)-Konzentration wird das effektive Volumen der Probe berechnet. Die Probenvolumina bewegen sich im Milliliter-Bereich.

Cr₂(SO₄)₃· 10 H₂O liegt in wässriger Lösung als [Cr(H₂O)₆]³⁺ vor. Der Aquakomplex [Cr(H₂O)₆]³⁺ weist gemäss Literatur (siehe Walter Schneider in "Einführung in die Koordinationschemie", Springer Verlag Berlin, Heidelberg, New York 1968, Seiten 115-117) einen molaren Extinktionskoeffizienten (ε) von nur ca. 13 auf, wobei ein ε von weniger als 100 als kleiner bis mittlerer Wert gilt. Bei reinen Aquakomplexen beträgt der Extinktionskoeffizient ε etwa 50. Die Konzentration eines Farbstoffes und die optische Absorption sind über das Lambert-Beer'sche-Gesetz (*A* = *c* *ε * *I*) verknüpft.
Dabei gelten:
A = optische Absorption
c = Konzentration des gelösten Stoffes [M = Mol/L]
ε = Molarer Extinktionskoeffizient des gelösten Stoffes [1/(M·cm)]
*I* = Schichtdicke (der Flüssigkeit, die das Licht durchlaufen muss)[cm].

Aus gerätetechnischen Gründen empfiehlt sich (vgl. Bruno Lange et al. in "Photometrische Analyse", VCH Verlagsgesellschaft mbH, Weinheim, 1987, Seite 21), nur im Absorptionsbereich von 0.1 bis 1 zu messen. Je höher das s ist, um so empfindlicher kann das Messsystem ausgestaltet werden. Um ein Volumen von 1 µl in einem Endvolumen von 200 µl mit einer optischen Absorption von 0.1 messen zu können, müsste die Konzentration von [Cr(H₂O)₆]³⁺ gemäss dem Lambert-Beer'schen Gesetz in der Probe mindestens 15 Mol/L betragen. Durch diese hohe Konzentration werden aber die physikalischen Eigenschaften der Probe bedeutend verändert, was selbstverständlich unerwünscht ist.

Die Aufgabe der vorliegenden Erfindung besteht darin, ein alternatives Verfahren sowie eine entsprechende Vorrichtung zur Bestimmung des Volumens einer Probe einer Flüssigkeit vorzuschlagen, welches die Unzulänglichkeiten aus dem Stand der Technik beseitigt und eine Kalibrierung auch im Submikroliter-Bereich ermöglicht.

Diese Aufgabe in Bezug auf das Verfahren wird mit den Merkmalen des unabhängigen Anspruchs 1 gelöst. In Bezug auf die Vorrichtung wird die Aufgabe mit den Merkmalen des unabhängigen Anspruchs 17 gelöst. Zusätzliche bzw. weiterbildende Merkmale ergeben sich aus den abhängigen Ansprüchen.

Die gemäss der vorliegenden Erfindung verwendeten Metallkomplex-Farbstoffe weisen Extinktionskoeffizienten ε von über 10'000 auf, was - gegenüber dem Stand der Technik - den Einsatz von wesentlich empfindlicheren Messsystemen erlaubt: So weisen der Eisen-tris-Bathophenantrolin-disulfonsäuredinatrium-Komplex [Fe(C₂₄H₁₆N₂O₆S₂)₃]⁴⁻ ein ε von ca. 18'700 (bei 532 nm), der Eisen-tris-Ferrozin-Komplex [Fe(C₂₀H₁₂N₄O₆S₂)₃]⁴⁻ ein ε von ca. 22'000 (bei 560 nm), der Kupfer-Chromazurol S-Komplex [Cu(C₂₃H₁₃Cl₂O₉S]⁻ ein ε von ca. 16'000 (bei 522 nm) und der Kupfer-bis-Bathophenantrolin-disulfonsäuredinatrium-Komplex [CU(C₂₄H₁₆N₂O₆S₂)₂]³⁻ ein ε von ca. 13'800 (bei 481 nm) auf.

Aus dem Stand der Technik bekannte, intensiv farbige organische Farbstoffe sind prinzipienbedingt (meist grosse konjugierte n-Systeme) planar (z.B. Orange G). Durch diese Planarität weisen sie eine nachteilige, durch die Van der Waals-Kräfte bedingte, hohe Affinität zu apolaren Oberflächen wie den Innenwänden der Pipettenspitze, des Tubings oder der Aufnahmetöpfchen auf.

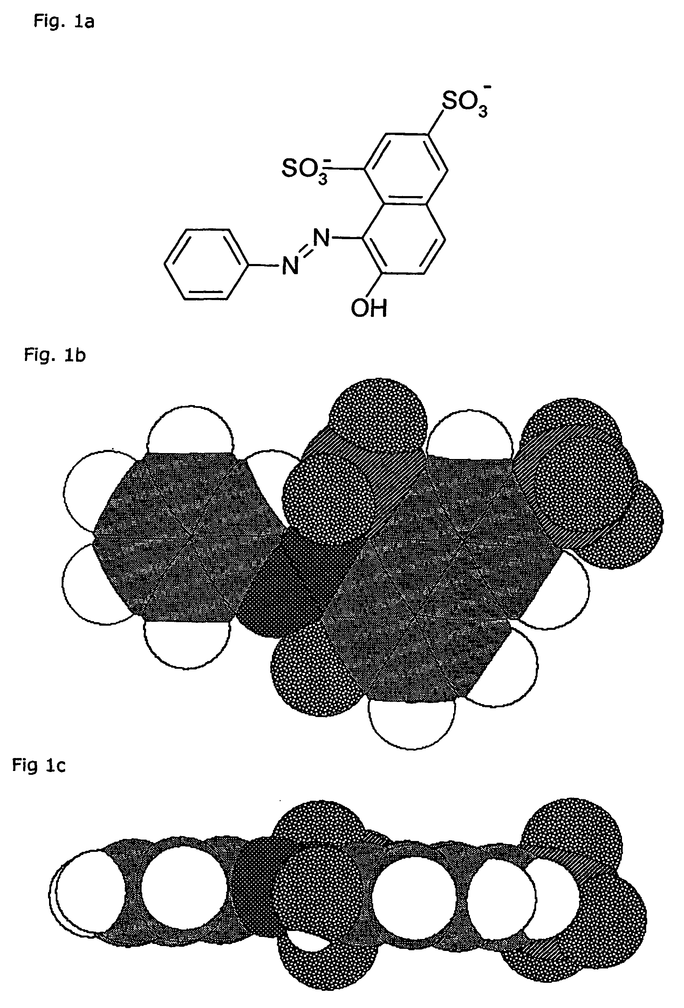

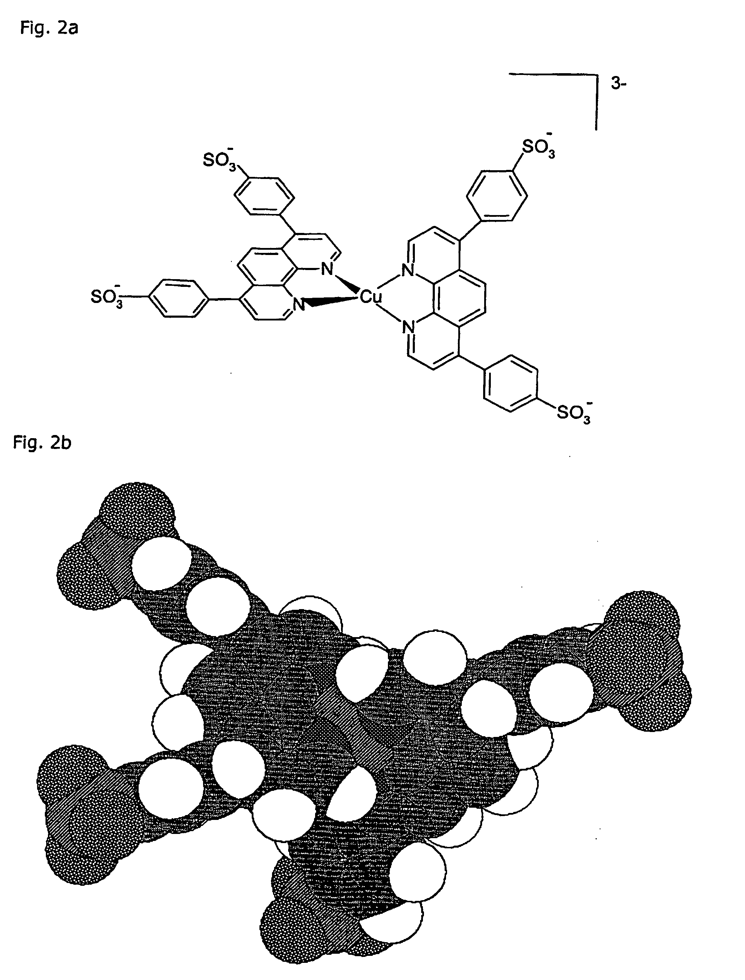

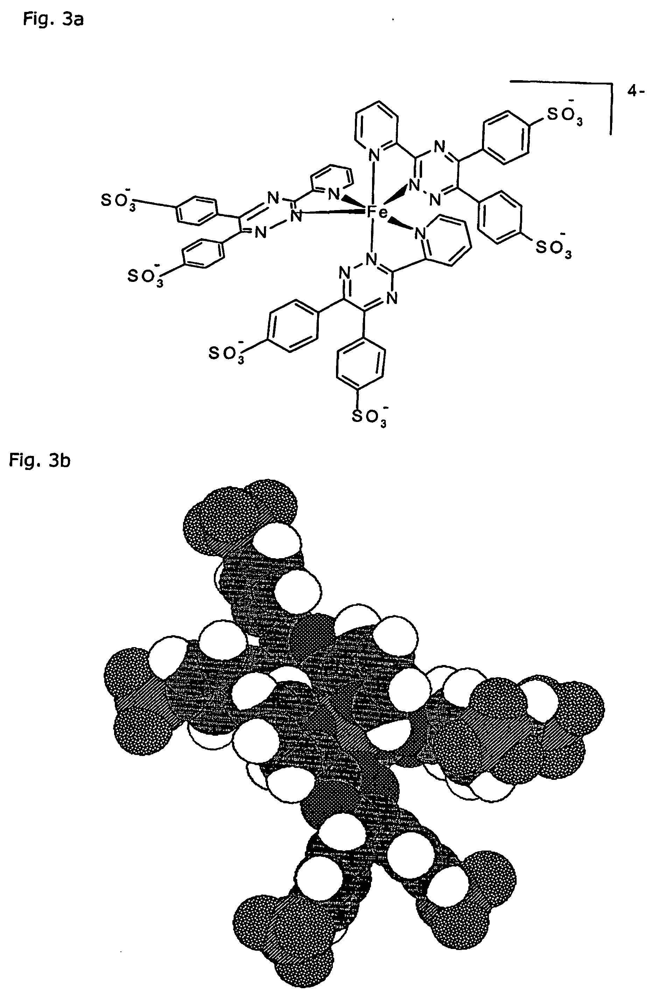

Ein Beispiel eines Moleküls aus dem Stand der Technik ist in Fig. 1 und zwei Beispiele von zur Verwendung im erfindungsgemässen Verfahren zur Bestimmung des Volumens einer Probe einer Flüssigkeit vorgeschlagenen Metall-Komplexfarbstoffen sind in den Figuren 2 und 3 dargestellt. Dabei zeigen:

| Fig. 1 | Orange G | |
|---|---|---|
| | Fig. 1a | Strukturformel |
| | Fig. 1b | Draufsicht, raumfüllend |
| | Fig. 1c | Seitenansicht, raumfüllend |

| Fig. 2 | Kupfer(I)-bis(Bathophenantrolin-disulfonsäuredinatrium)-Komplex | |
|---|---|---|
| | Fig. 2a | Strukturformel |
| | Fig. 2b | Ansicht raumfüllend |

| Fig. 3 | Eisen(II)-tris(Ferrozin)-Komplex | |
|---|---|---|
| | Fig. 3a | Strukturformel |
| | Fig. 3b | Ansicht raumfüllend |

Erfindungsgemäss vorgeschlagene Metall-Komplexfarbstoffe weisen (im Gegensatz z.B. zum organischen Farbstoff Orange G) eine dreidimensionale, z.B. tetraedrische oder oktaedrische Koordinationsgeometrie auf, was aus sterischen Gründen eine Adsorption solcher Moleküle an apolaren Oberflächen massiv behindert. Zusätzlich können die Liganden mit ionischen Gruppen wie Sulfon- oder Carboxyl-Gruppen substituiert werden, was die hydrophilen bzw. die lipophoben Eigenschaften weiter verstärkt. Indikator-Ionen in wässrigen Systemen sind wegen ihrer Ladung und der kugelförmigen Hydrathülle sehr hydrophil und neigen daher ebenfalls nicht zur Adsorption an apolare Oberflächen.

Adsorptionstests mit verschiedenen erfindungsgemäss vorgeschlagenen Komplexen haben gezeigt, dass keine signifikante Adsorption an den Wandungen der Pipettiernadeln oder Tubings stattfindet.

Es ist erwünscht, dass bei dem Messverfahren die pipettierrelevanten Flüssigkeitseigenschaften möglichst wenig verändert werden. Die Zugabe eines Indikator-Salzes in die Pipettierlösung, welches im Aufnahmetöpfchen einer Mikroplatte mit einem chromogenen Liganden reagiert, beeinflusst die Flüssigkeitseigenschaften auf Grund der guten Löslichkeit nur geringfügig. Die Beeinflussung der physikalischen Eigenschaften wird zusätzlich vermindert, indem es Dank des hohen Extinktionskoeffizienten des entstandenen Komplexes möglich wird, nur geringe Ausgangskonzentrationen des Indikator-Salzes einzusetzen.

In den Aufnahmetöpfchen muss eine zumindest stöchiometrische Menge des chromogenen Liganden vor oder nach dem Pipettieren der Indikator-Salz-Lösung vorliegen. Zur sicheren und schnellen quantitativen Reaktion kann auch ein Überschuss an Liganden eingesetzt werden. Allfällige Puffersalze oder redoxaktive Substanzen, die das Indikator-Ion in eine geeignete Oxidationsstufe überführen, liegen ebenfalls in den Aufnahmetöpfchen vor. Der eigentliche Pipettiervorgang wird dadurch aber in keiner Weise beeinflusst, wodurch dieses Messsystem sehr variabel wird.

Die meisten Farbstoffe sind von ihrer Löslichkeit her jeweils nur für einen bestimmten Bereich von Lösungsmitteln geeignet. Durch das Komplexieren des Indikator-Ions mit einem geeigneten Hilfsliganden kann das Indikator-Ion in jedem beliebigen Lösungsmittel oder Lösungsmittelgemisch in geeigneter Konzentration in Lösung gebracht werden. Zum Beispiel können Eisen(III)-Ionen mit 2,4-Pentandion als [Fe(C₅H₇O₂)₃]-Komplex in unpolareren Lösungsmitteln gut in Lösung gebracht werden. Von 2,4-Pentandion ist eine breite Palette von Derivaten zugänglich, über die die Löslichkeit des Eisenkomplexes in beliebigen Lösungsmitteln eingestellt werden kann. Im Aufnahmetöpfchen wird ein Hilfsligand entweder durch einen stärkeren chromogenen Liganden quantitativ verdrängt und/oder das komplexierte Indikator-Ion wird durch eine Redoxreaktion in eine Oxidationsstufe überführt, welche die quantitative Bildung eines stärkeren Komplexes mit dem chromogenen Liganden erlaubt. Es ist darauf zu achten, dass das Absorptionsspektrum des Hilfsliganden nicht mit demjenigen des chromphoren Komplexes überlappt.

ELISA-Tests (ELISA = Enzyme-Linked Immuno Sorbent Assay) (vgl. "PSCHY-REMBEL Klinisches Wörterbuch" Walter de Gruyter GmbH & Co. KG, Berlin 1999, 258. Auflage) sind aus der heutigen Klinischen Diagnostik und Live Science Forschung nicht mehr wegzudenken. Diese Tests erfordern häufig einen oder mehrere Waschschritte im Verlauf eines Tests (vgl. Lubert Stryer in "BIOCHEMIS-TRY", Freeman and Company, New York 1988, 3^{rd} Edition, Page 63). In der Praxis wird die Reaktionsflüssigkeit aus den beschichteten Mikroplatten abgesaugt. Daraufhin werden Pufferlösungen oder Testreagentien in die Aufnahmetöpfchen dispensiert. Diese beiden Funktionen werden von einem Mikroplatten-Wascher übernommen. Im ersten Schritt agiert das Gerät als Absauger, im zweiten Schritt wird das Gerät als Dispenser verwendet. Neuere auf dem Markt erhältliche Geräte (wie z.B. von TECAN Austria, Untersbergstrasse 1a, 5082 Groedig, Österreich) können mehrere verschiedene Pufferlösungen, welche einzeln oder zusammen verwendet werden, dispensieren. Mikroplatten-Wascher müssen - neben den bekannten Kriterien für den Dispens - zusätzliche Spezifikationen in Bezug auf das Restvolumen (z.B. höchstens 2 µl) nach dem Absaugen in einem Aufnahmetöpfchen erfüllen.

Mikroplatten bestehen vorzugsweise aus optisch einwandfreien Materialien. Andernfalls sind Blindwertmessungen unumgänglich. Besonders bevorzugt werden Mikroplatten mit flachen Böden und parallelen Wänden verwendet. In Mikroplatten, besonders mit 384 oder mehr Aufnahmetöpfchen, kann auf Grund von Oberflächenspannung und Flüssigkeit/Wandung-Wechselwirkung verstärkte Meniskusbildung auftreten. Wenn die Menisken von Flüssigkeitstöpfchen zu Flüssigkeitstöpfchen unregelmässig sind, resultieren daraus unterschiedliche Weglängen für die photometrischen Messungen, welche die Reproduzierbarkeit negativ beeinflussen. Es empfiehlt sich daher, Mikroplatten mit Low-Binding Eigenschaften oder anderweitig modifizierten Oberflächen zu verwenden, um die verstärkte Meniskusbildung zu unterdrücken.

In einem ersten Ausführungsbeispiel quantitativer Messungen wurde das System "FeSO₄ in wässriger Lösung mit FerroZine® " eingesetzt; "FerroZine® " ist das eingetragene Warenzeichen von Hach Company, P.O. Box 389, Loveland, CO 80539 USA. Die Proben wurden sowohl im Single Pipetting Modus (je 12 Einzelpipettierungen) als auch im Multi Pipetting Modus (12 Aliquote) pipettiert. Es wurden 20, 100, 200 bzw. 1000 Einzeltropfen (Solltropfenvolumen = 500 pl) abgegeben.

Für die Eichkurve wurde eine wässrige 0.25 M FeSO₄-Lösung mit FerroZine® und Ammoniumacetat-Puffer angesetzt. Die entstandene Komplexlösung wurde mit Ascorbinsäure stabilisiert. Aus dieser Stammlösung wurden durch Verdünnen Messlösungen hergestellt, die Pipettiervolumina von 2.5 nl, 5.0 nl, 10.0 nl, 20.0 nl, 40.0 nl und 80.0 nl in 200 µl entsprechen. Jeweils 12 Aliquote à 200 µl dieser Messlösungen wurden von Hand in eine Mikroplatte pipettiert und die optische Absorption bzw. die Optical Densities (OD) mit einem Mikroplatten-Photometrie-Reader gemessen. Durch die Messpunkte konnte mittels Linearer Regression die Eichkurve errechnet werden.

Für die Volumenbestimmungen wurden jeweils 100 µl einer mit Ammoniumacetat gepufferten 3.25 mM FerroZine®-Lösung mit Ascorbinsäure in den Aufnahmetöpfchen einer Mikroplatte vorgelegt. Darauf wurden 10 nl und 50 nl einer mit Ascorbinsäure stabilisierten 0.25 M FeSO₄-Lösung mit dem Pipettierautomaten zupipettiert. Die Pipettierungen von 100 nl und 500 nl wurden mit einer mit Ascorbinsäure stabilisierten 0.025 M FeSO₄-Lösung durchgeführt.

Nach dem Pipettiervorgang wurde das Volumen mit demineralisiertem Wasser in den einzelnen Aufnahmetöpfchen auf 200 µl Gesamtvolumen aufgefüllt und die Lösungen in den Mikroplatten durch mechanisches Schütteln gut durchmischt. Die optische Absorption der gefärbten Komplexlösung in den Aufnahmetöpfchen der Mikroplatte wurde darauf in einem Mikroplatten-Photometrie-Reader gemessen und die Volumina anhand der Eichkurve berechnet.

Die mit dem System "FeSO₄ in wässriger Lösung mit FerroZine® " erzielten Resultate sind in den folgenden Tabellen 1 und 2 dargestellt:

**Tabelle 1**

| Single Pipetting Modus | | | |
|---|---|---|---|
| Sollvolumen | Durchschnittsvolumina der 12 Einzelpipettierungen | ACC | CV |
| 10 nl | 9.7 nl | 3.0% | 2.9 % |
| 50 nl | 48.0 nl | 4.0% | 1.2 % |
| 100 nl | 101.8 nl | 1.8% | 1.5 % |
| 500 nl | 497.5 nl | 0.5% | 1.5 % |

**Tabelle 2**

| Multi Pipetting Modus | | | |
|---|---|---|---|
| Sollvolumen | Durchschnittsvolumina der 12 Aliquote | ACC der Aliquote | CV der Aliquote |
| 10 nl | 9.8 nl | 2.0% | 1.4 % |
| 50 nl | 48.1 nl | 3.8% | 2.5 % |
| 100 nl | 99.3 nl | 0.7% | 4.0 % |
| 500 nl | 509.0 nl | 1.8% | 2.8 % |

In einem zweiten Ausführungsbeispiel quantitativer Messungen wurde das System "Eisen-tris(acetylacetonat) in 100 % Dimethylsulfoxid (DMSO) mit FerroZine®" eingesetzt. Die Proben wurden sowohl im Single Pipetting Modus (je 12 Einzelpipettierungen) als auch im Multi Pipetting Modus (12 Aliquote) pipettiert. Es wurden 20, 100, 200 bzw. 1000 Einzeltropfen (Solltropfenvolumen = 400 pl) abgegeben. Für die Eichkurve wurde eine 0.063 M Eisen-tris(acetyl-acetonat)-Lösung in reinem DMSO angesetzt. Aus dieser Stammlösung wurden durch Verdünnen mit Ammoniumacetat-Puffer, Ascorbinsäure und FerroZine® Messlösungen hergestellt, die Pipettiervolumina von 2.5 nl, 5.0 nl, 10.0 nl, 20.0 nl, 40.0 nl und 80.0 nl in 200 µl entsprechen. Jeweils 12 Aliquote à 200 µl dieser Messlösungen wurden von Hand in eine Mikroplatte pipettiert und die optische Absorption bzw. die Optical Densities (OD) mit einem Mikroplatten-Photometrie-Reader gemessen. Durch die Messpunkte konnte mittels Linearer Regression die Eichkurve errechnet werden. Für die Volumenbestimmungen wurden jeweils 100 µl einer mit Ammoniumacetat gepufferten 3.25 mM FerroZine®-Lösung mit Ascorbinsäure in den Aufnahmetöpfchen einer Mikroplatte vorgelegt. Darauf wurden 8 nl, 40 nl, 80 nl und 400 nl einer 0.063 M Eisen-tris(acetylacetonat)-Lösung in reinem DMSO mit dem Pipettierautomaten zupipettiert.

Nach dem Pipettiervorgang wurde das Volumen mit demineralisiertem Wasser in den einzelnen Aufnahmetöpfchen auf 200 µl Gesamtvolumen aufgefüllt und die Lösungen in den Mikroplatten durch mechanisches Schütteln gut durchmischt. Die optische Absorption der gefärbten Komplexlösung in den Aufnahmetöpfchen der Mikroplatte wurde darauf in einem Mikroplatten-Photometrie-Reader gemessen und die Volumina anhand der Eichkurve berechnet. Die mit dem System "Eisen-tris(acetylacetonat) in 100 % Dimethylsulfoxid (DMSO) mit FerroZine® erzielten Resultate sind in den folgenden Tabellen 3 und 4 dargestellt:

**Tabelle 3**

| Single Pipetting Modus | | | |
|---|---|---|---|
| Sollvolumen | Durchschnittsvolumina der 12 Einzelpipettierungen | ACC | CV |
| 8 nl | 8.3 nl | 3.8% | 1.7% |
| 40 nl | 37.8 nl | 5.5% | 2.6% |
| 80 nl | 71.2 nl | 11.0% | 1.1% |
| 400 nl | 356.9 nl | 10.8% | 1.8% |

**Tabelle 4**

| Multi Pipetting Modus | | | |
|---|---|---|---|
| Sollvolumen | Durchschnittsvolumina der 12 Aliquote | ACC der Aliquote | CV der Aliquote |
| 8 nl | 8.0 nl | 0.0% | 1.2% |
| 40 nl | 38.1 nl | 4.8% | 1.0% |
| 80 nl | 75.8 nl | 5.3% | 0.8% |
| 400 nl | 377.9 nl | 5.5% | 1.1% |

Wie diese Beispiele zeigen, wurde die eingangs gestellte Aufgabe gelöst. Tatsächlich erlaubt das erfindungsgemäss vorgeschlagene Verfahren unter Verwendung der erfindungsgemäss vorgeschlagenen Metall-Komplexfarbstoffe sowie einer entsprechenden Vorrichtung die Bestimmung des Volumens einer Probe einer Flüssigkeit und eine Kalibrierung im Submikroliter-Bereich.

Die Erfindung ist ebenfalls auf die Bestimmung des Volumens einer Probe einer Flüssigkeit und eine Kalibrierung im Submikroliter-Bereich anwendbar, wenn Anionen als Indikator zum Anfärben der Flüssigkeit (A) verwendet werden. Auch in solchen Fällen erzeugt die Komplexierung mit einem spezifischen Liganden die Färbung der Probe. Beispiele für Liganden zum Komplexieren von F⁻, Cl⁻ bzw. H₂PO₄⁻-Ionen in (Dichlormethan) ergeben sich aus dem Aufsatz von Miyamji, Sato und Sessler (Angew. Chem. 2000, Vol. 112, Nr. 10: 1847 - 1849): An der β-Position kovalent gebundene, anthrachinon-funktionalisierte Systeme, insbesondere calix[4]pyrrole-anthrachinone, erwiesen sich als sehr empfindliche Sensoren zum Nachweis dieser Anionen.

## Patentansprüche

1. Verfahren zur Bestimmung des Volumens einer Probe einer Flüssigkeit (A), bei dem - zum Anfärben der Flüssigkeit (A) - eine bestimmte Konzentration eines chromophoren Indikators in dieser Flüssigkeit (A) erstellt, eine Probe von der Flüssigkeit (A) abgetrennt, die optische Absorption der abgetrennten Probe gemessen und das Volumen der abgetrennten Probe durch Korrelation der gemessenen optischen Absorption mit der Konzentration des Indikators in dieser Flüssigkeit (A) bestimmt wird, **dadurch gekennzeichnet, dass** als Indikator zum Anfärben der Flüssigkeit (A) Ionen verwendet werden, welche durch Komplexierung mit einem spezifischen Liganden die Färbung der Probe erzeugen.

2. Verfahren - zur Bestimmung des Restvolumens einer von einer Flüssigkeit (A) abgetrennten Probe in einer Probenaufnahme, aus der ein Teil der Probe entnommen wird, so dass nur noch ein Probenrest in der Probenaufnahme zurückbleibt - bei dem - zum Anfärben der Flüssigkeit (A) - eine bestimmte Konzentration eines chromophoren Indikators in dieser Flüssigkeit (A) erstellt, eine Probe von der Flüssigkeit (A) in die Probenaufnahme abgetrennt, ein Diluent zum Probenrest hinzugefügt und die optische Absorption des verdünnten Probenrests gemessen wird, wobei das Restvolumen durch Korrelation der gemessenen optischen Absorption mit der ursprünglichen Konzentration des Indikators in dieser Flüssigkeit (A) bestimmt wird, **dadurch gekennzeichnet, dass** als Indikator zum Anfärben der Flüssigkeit (A) Ionen verwendet werden, welche durch Komplexierung mit einem spezifischen Liganden die Färbung der Probe erzeugen.

3. Verfahren nach Anspruch 1 oder 2, **dadurch gekennzeichnet, dass** - vor dem Abtrennen einer Probe - der chromophore Indikator mit dem Ligand komplexiert und als farbige Komplex-Lösung der Flüssigkeit (A) zugegeben wird.

4. Verfahren nach einem der vorhergehenden Ansprüche 1 oder 3, **dadurch gekennzeichnet, dass -** vor dem Abtrennen einer Probe - ein Ausgleichsvolumen als Teil eines Diluents in einer Probenaufnahme vorgelegt wird.

5. Verfahren nach Anspruch 1, **dadurch gekennzeichnet, dass -** vor dem Abtrennen einer Probe - ein Indikator-Salz der Flüssigkeit (A) zugegeben, eine Probe der Flüssigkeit (A) in eine vorgelegte Reaktionslösung mit dem chromogenen Liganden abgegeben und dort unter Farbentwicklung komplexiert wird.

6. Verfahren nach Anspruch 1, **dadurch gekennzeichnet, dass** der chromophore Indikator vor dem Zugeben zu der Flüssigkeit (A) und zum Verbessern dessen Löslichkeit in dieser Flüssigkeit (A) mit einem Hilfsliganden komplexiert und der Flüssigkeit (A) zugegeben, eine Probe der Flüssigkeit (A) in eine vorgelegte Reaktionslösung mit dem Liganden abgegeben und dort unter Verdrängung des Hilfsliganden und Farbentwicklung mit dem Liganden komplexiert wird.

7. Verfahren nach Anspruch 5 oder 6, **dadurch gekennzeichnet, dass** der chromogene Ligand der vorgelegten Reaktionslösung im Überschuss zur erwarteten Reaktionsmenge beigegeben wird.

8. Verfahren nach einem der Ansprüche 3 bis 7, **dadurch gekennzeichnet, dass -** nach dem Abtrennen einer Probe in ein Probenaufnahme-Gefässein Ergänzungsvolumen in diese Probenaufnahme zugegeben wird.

9. Verfahren nach einem der vorhergehenden Ansprüche, **dadurch gekennzeichnet, dass** als Indikator Metall-Ionen, insbesondere Fe⁺⁺, Fe⁺⁺⁺ oder Cu⁺⁺, verwendet werden.

10. Verfahren nach einem der Ansprüche 1 bis 8, **dadurch gekennzeichnet, dass,** als Indikator Anionen, insbesondere F⁻, Cl⁻, oder H₂PO₄⁻, verwendet werden.

11. Verfahren nach einem der vorhergehenden Ansprüche 1 bis 8, **dadurch gekennzeichnet, dass** als Indikator nicht quantitativ mit dem chromogenen Liganden komplexierbare Metall-Ionen, insbesondere Fe⁺⁺⁺, verwendet werden.

12. Verfahren nach Anspruch 11, **dadurch gekennzeichnet, dass** die nicht quantitativ mit dem chromogenen Liganden komplexierbaren Metall-Ionen vor dem Komplexieren mit dem Liganden zu komplexierbaren Ionen reduziert oder oxidiert werden.

13. Verfahren nach Anspruch 12, **dadurch gekennzeichnet, dass** als Reduktionsmittel Hydroxylaminhydrochlorid, Tartrat-Salze, Ascorbinsäure und dergleichen, und dass als Oxidationsmittel Hexacyanoferrat, elementares Brom und dergleichen verwendet werden.

14. Verfahren nach einem oder mehreren der vorhergehenden Ansprüche 1 bis 9 oder 11 bis 13, **dadurch gekennzeichnet, dass** als Ligand Polydentate, wie z.B. FerroZine® , Bathophenantrolin-disulfonsäuredinatrium, Bathocuproin-disulfonsäuredinatrium oder Chromazurol S, verwendet werden.

15. Verfahren nach einem oder mehreren der vorhergehenden Ansprüche 6 bis 9 oder 11 bis 14, **dadurch gekennzeichnet, dass** als Hilfsligand β-Diketone, wie z.B. Acetylacetonat oder Pentan-2,4-dion-1,5-diol, verwendet werden.

16. Verfahren nach Anspruch 10, **dadurch gekennzeichnet, dass** als Ligand an der β-Position kovalent gebundene, anthrachinon-funktionalisierte Systeme, insbesondere Calix[4]pyrrole-anthrachinon, verwendet werden.

17. System zur Durchführung des Verfahrens nach einem oder mehreren der Ansprüche 1 bis 16, welches eine Dispensier- und/oder Pipettiervorrichtung, eine Probenaufnahme zum Aufnehmen von abgetrennten Proben, einer Testlösung eines chromophoren Indikators mit Ionen, welche durch Komplexierung mit einem spezifischen Liganden die Färbung der Proben erzeugen, ein Gerät zum Messen der optischen Absorption der Proben in der Probenaufnahme und einen Rechner zum Berechnen des Volumens der abgetrennten Proben umfasst.

18. System nach Anspruch 17, **dadurch gekennzeichnet, dass** es ein Pipettier- und/oder Dispensierautomat mit N Kanälen, wobei N insbesondere 1, 4, 8, 96 oder 384 Kanäle bedeutet, ist.

19. System nach Anspruch 17, **dadurch gekennzeichnet, dass** es ein Waschautomat, insbesondere für Mikroplatten, mit N Kanälen, wobei N insbesondere 8, 12, 16, 96 oder 384 Kanäle bedeutet, ist.

20. System nach Anspruch 17, 18 oder 19, **dadurch gekennzeichnet, dass** die Probenaufnahme als eine Mikroplatte bzw. als ein Array von Töpfchen ausgebildet ist.

21. System nach Anspruch 18 oder 19, **dadurch gekennzeichnet, dass** es eine Trägerplatte mit den Aussenmassen einer Mikroplatte und eine Einrichtung für die Messung der Temperatur von Mikroplatteninkubatoren umfasst.

22. Testkit zur Durchführung des Verfahrens nach einem oder mehreren der Ansprüche 1 bis 16 und/oder in einem System gemäss einem oder mehrerer der Ansprüche 17 bis 21, **dadurch gekennzeichnet, dass** er zumindest eine in Konzentration und optischer Absorption definierte Testlösung eines chromophoren Indikators mit Ionen, welche durch Komplexierung mit einem spezifischen Liganden die Färbung der Probe erzeugen, umfasst.

23. Testkit nach Anspruch 22, **dadurch gekennzeichnet, dass** er zusätzlich eine definierte Reaktionslösung mit einem chromogenen Liganden umfasst.

24. Testkit nach Anspruch 22 oder 23, **dadurch gekennzeichnet, dass** er zudem ein Reduktions- oder Oxidationsmittel umfasst.

25. Testkit nach einem der Ansprüche 22 bis 24, **dadurch gekennzeichnet, dass** er zudem einen Diluentpuffer und/oder einen Hilfsliganden umfasst.

26. Testkit nach einem der Ansprüche 22 bis 25, **dadurch gekennzeichnet, dass** er zudem Mikroplatten umfasst.

27. Testkit nach Anspruch 26, **dadurch gekennzeichnet, dass** die Mikroplatten eine ausgewählte Geometrie bzw. eine ausgewählte Oberflächeneigenschaft aufweisen.

## Claims

1. Procedure for the determination of the volume of a sample of a liquid (A) in which, for the purpose of colouring the liquid (A), a certain concentration of a chromophore indicator is obtained in this liquid (A), a sample of the liquid (A) is isolated, the optical absorption of the isolated sample is measured and the volume of the isolated sample is determined from the correlation between the measured optical absorption and the concentration of the indicator in the liquid (A), **characterized in that** as the indicator for colouring the liquid (A), ions are used that generate the coloration of the sample by complexation with a specific ligand.

2. Procedure for the determination of the volume remaining of an isolated sample of a liquid (A) in a sample receptacle after a portion of the sample has been removed, so that only a remnant of the original sample is still present in the receptacle, in which, for the purpose of colouring the liquid (A), a certain concentration of a chromophore indicator is obtained in this liquid (A), a sample of the liquid (A) is isolated in the receptacle, a diluent is added to the sample remnant and the optical absorption of the diluted sample remnant is measured, the remaining volume being determined from the correlation between the measured optical absorption and the original concentration of the indicator in the liquid (A), **characterized in that** as the indicator for colouring the liquid (A), ions are used that generate the coloration of the sample by complexation with a specific ligand.

3. Procedure according to Claim 1 or 2, **characterized in that** before the sample is isolated, the chromophore indicator is complexated with the ligand and added to the liquid (A) as a coloured complex solution.

4. Procedure according to one of Claims 1 or 3 above, **characterized in that** before the sample is isolated, a compensating volume is presented as part of a diluent in a sample receptacle.

5. Procedure according to Claim 1, **characterized in that** before the sample is isolated, an indicator salt is added to the liquid (A), a sample of liquid (A) is dispensed with the chromogen ligand into a prepared reagent solution and is there complexated with development of colour.

6. Procedure according to Claim 1, **characterized in that** the chromophore indicator, before being added to the liquid (A) and in order to improve its solubility in the liquid (A), is complexated with an auxiliary ligand and added to the liquid (A), and a sample of liquid (A) is dispensed with the ligand into a prepared reagent solution and there complexated with the ligand with displacement of the auxiliary ligand and development of colours.

7. Procedure according to Claim 5 or 6, **characterized in that** the chromogen ligand is added to the prepared reagent solution in a quantity in excess of the amount expected to be required for the reaction.

8. Procedure according to any one of Claims 3 to 7, **characterized in that** after a sample has been isolated in a sample reception vessel, a complementary volume is added to this sample.

9. Procedure according to any one of the preceding Claims, **characterized in that** as an indicator, metal ions, especially Fe⁺⁺, Fe⁺⁺⁺ or Cu⁺⁺ are used.

10. Procedure according to any one of Claims 1 to 8, **characterized in that** as an indicator, anions, especially F⁻, Cl⁻ or H₂PO₄⁻ are used.

11. Procedure according to any one of Claims 1 to 8 above, **characterized in that** as an indicator, metal ions not capable of quantitative complexation with the chromogen ligand, especially Fe⁺⁺⁺, are used.

12. Procedure according to Claim 11, **characterized in that** the metal ions not capable of quantitative complexation with the chromogen ligand are reduced or oxidized to complexatable ions before complexation with the ligand.

13. Procedure according to Claim 12, **characterized in that** as reducing agents, hydroxylaminehydrochloride, tartrate salts, ascorbic acid and similar are used, and as oxidizing agents, hexacyanoferrate, elementary bromine and similar are used.

14. Procedure according to one or more of Claims 1 to 9 or 11 to 13 above, **characterized in that** as a ligand, polydentates, for example, FerroZine®, bathophenantrolindisulfonic acid disodium, bathocuproindisulfonic acid disodium or Chromazurol S are used.

15. Procedure according to one or more of Claims 6 to 9 or 11 to 14 above, **characterized in that** as an auxiliary ligand, β-diketones, for example, acetylacetonate or pentane-2,4-dion-1,5-diol are used.

16. Procedure according to Claim 10, **characterized in that** as ligand in the β position, covalently bound, anthraquinone-functionalized systems, especially Calix[4] pyrrole-anthraquinone are used.

17. System for executing a procedure according to any one or several of Claims 1 to 16, comprising a dispensing and/or pipetting device, a receptacle for reception of isolated samples, a test solution of a chromophore indicator with ions which cause coloration of the samples through complexation with a specific ligand, a device for measuring the optical absorption of the samples in the receptacle and a computer for calculating the volume of the isolated samples.

18. System according to Claim 17, **characterized in that** it is an automatic pipetter and/or an automatic dispenser with N channels, where N means in particular 1, 4, 8, 96 or 384.

19. System according to Claim 17, **characterized in that** it is an automatic washer, especially for microplates, with N channels, where N means in particular 8, 12, 16, 96 or 384.

20. System according to Claim 17, 18 or 19, **characterized in that** the sample receptacle is in the form of a microplate or an array of wells.

21. System according to Claim 18 or 19, **characterized in that** it comprises a carrier plate with the external dimensions of a microplate and a device for measuring the temperature of microplate incubators.

22. Test kit for executing a procedure according to any one or several of Claims 1 to 16 and/or in a system according to any or several of Claims 17 to 21, **characterized in that** it comprises at least one test solution of a chromophore indicator defined in concentration and optical absorption with ions that cause coloration of the sample by complexation with a specific ligand.

23. Test kit according to Claim 22, **characterized in that** it also comprises a defined reagent solution with a chromogen ligand.

24. Test kit according to Claim 22 or 23, **characterized in that** it also comprises a reducing or oxidizing agent.

25. Test kit according to any one of Claims 22 to 24, **characterized in that** it also comprises a diluent buffer and/or an auxiliary ligand.

26. Test kit according to any one of Claims 22 to 25, **characterized in that** it also comprises microplates.

27. Test kit according to Claim 26, **characterized in that** the microplates display a selected geometry or a selected surface characteristic.

## Revendications

1. Procédé pour déterminer le volume d'un échantillon d'un liquide (A), dans lequel - pour colorer le liquide (A) - on élabore une concentration définie d'un indicateur chromophore dans ce liquide (A), on sépare un échantillon du liquide (A), on mesure l'absorption optique de l'échantillon séparé et on détermine le volume de l'échantillon séparé par corrélation entre l'absorption optique mesurée et la concentration de l'indicateur dans ce liquide (A), **caractérisé en ce que** l'on utilise comme indicateur de coloration du liquide (A) des ions qui génèrent la coloration de l'échantillon par complexion avec un ligand spécifique.

2. Procédé - pour déterminer le volume résiduel d'un échantillon séparé d'un liquide (A) dans un récepteur d'échantillon à partir duquel on a prélevé une partie de l'échantillon de façon telle que seul un reste d'échantillon subsiste encore dans le récepteur d'échantillon - dans lequel - pour colorer le liquide (A) - on élabore une concentration définie d'un indicateur chromophore dans ce liquide (A), on sépare un échantillon du liquide (A) dans le récepteur d'échantillon, on ajoute un diluant au reste d'échantillon et on mesure l'absorption optique du reste d'échantillon dilué, le volume résiduel étant déterminé par corrélation entre l'absorption optique mesurée et la concentration originale de l'indicateur dans ce liquide (A), **caractérisé en ce que** l'on utilise comme indicateur de coloration du liquide (A) des ions qui génèrent la coloration de l'échantillon par complexion avec un ligand spécifique.

3. Procédé selon la revendication 1 ou 2, **caractérisé en ce que** - avant la séparation d'un échantillon - l'indicateur chromophore est complexé avec le ligand et ajouté au liquide (A) en tant que solution de complexe colorée.

4. Procédé selon l'une des revendications précédentes 1 ou 3, **caractérisé en ce que** - avant la séparation d'un échantillon - il existe dans un récepteur d'échantillon un volume d'équilibre en tant que partie d'un diluant.

5. Procédé selon la revendication 1, **caractérisé en ce que** - avant la séparation d'un échantillon - un sel indicateur est ajouté au liquide (A), un échantillon du liquide (A) est déchargé dans une solution réactionnelle existante avec le ligand chromogène, et complexé alors avec développement de couleur.

6. Procédé selon la revendication 1, **caractérisé en ce que** l'indicateur chromophore, avant l'ajout au liquide (A) et pour améliorer sa solubilité dans le liquide (A), est complexé avec un ligand auxiliaire et ajouté au liquide (A), un échantillon du liquide (A) étant déchargé dans une solution réactionnelle existante avec le ligand et alors complexé avec le ligand, par déplacement du ligand auxiliaire et développement de couleur.

7. Procédé selon la revendication 5 ou 6, **caractérisé en ce que** le ligand chromogène est ajouté à la solution réactionnelle existante en excès par rapport à la quantité réactionnelle attendue.

8. Procédé selon l'une des revendications 3 à 7, **caractérisé en ce que** - après la séparation d'un échantillon dans un récipient récepteur d'échantillon - on ajoute dans ce récepteur d'échantillon un volume de complément.

9. Procédé selon l'une des revendications précédentes, **caractérisé en ce que** l'on utilise en tant qu'indicateur des ions métalliques, en particulier Fe⁺⁺, Fe⁺⁺⁺ ou Cu⁺⁺.

10. Procédé selon l'une des revendications 1 à 8, **caractérisé en ce que** l'on utilise en tant qu'indicateur des anions, en particulier F, Cl⁻ ou H₂PO₄⁻.

11. Procédé selon l'une des revendications précédentes 1 à 8, **caractérisé en ce que** l'on utilise en tant qu'indicateur des ions métalliques non complexables quantitativement avec le ligand chromogène, en particulier Fe⁺⁺⁺.

12. Procédé selon la revendication 11, **caractérisé en ce que** les ions métalliques non complexables quantitativement avec le ligand chromogène sont réduits ou oxydés en ions complexables avant la complexion avec le ligand.

13. Procédé selon la revendication 12, **caractérisé en ce que** l'on utilise en tant qu'agent réducteur du chlorhydrate d'hydroxylamine, des sels tartrate, de l'acide ascorbique et équivalent, et en tant qu'agent oxydant de l'hexacyanoferrate, du brome élémentaire et équivalent.

14. Procédé selon une ou plusieurs des revendications précédentes 1 à 9 ou 11 à 13, **caractérisé en ce que** l'on utilise en tant que ligand un polydentate, comme par exemple FerroZine®, de la bathophénantroline-disodium d'acide disulfonique, de la bathocuproïne-disodium d'acide disulfonique ou Chromazurol S.

15. Procédé selon une ou plusieurs des revendications précédentes 6 à 9 ou 11 à 14, **caractérisé en ce que** l'on utilise comme ligand auxiliaire une β-dicétone, par exemple de l'acétonate d'acétyle ou du pentane-2,4-dione-1,5-diol.

16. Procédé selon la revendication 10, **caractérisé en ce que** l'on utilise en tant que ligand des systèmes liés de façon covalente en position β et fonctionnalisés à l'anthraquinone, en particulier la Calix[4] pyrrole-anthraquinone.

17. Système de réalisation du procédé selon une ou plusieurs des revendications 1 à 16, qui comporte un dispositif de distribution et/ou de pipetage, un récepteur d'échantillon pour prélever des échantillons séparés, une solution de test d'un indicateur chromophore avec des ions qui génèrent, par complexion avec un ligand spécifique, la coloration des échantillons, un appareil de mesure de l'absorption optique des échantillons dans le récepteur d'échantillon, et un calculateur destiné à calculer le volume des échantillons séparés.

18. Système selon la revendication 17, **caractérisé en ce qu'**il s'agit d'un automate de pipetage et/ou d'un automate de distribution comportant N canaux, N valant en particulier 1, 4, 8, 96 ou 384 canaux.

19. Système selon la revendication 17, **caractérisé en ce qu'**il s'agit d'un automate de lavage, en particulier pour plaques de microtitration, comportant N canaux, N valant en particulier 8, 12, 16, 96 ou 384 canaux.

20. Système selon la revendication 17, 18 ou 19, **caractérisé en ce que** le récepteur d'échantillon est exécuté en tant que plaque de microtitration ou en tant que matrice de puits.

21. Système selon la revendication 18 ou 19, **caractérisé en ce qu'**il comprend une plaque de support présentant les dimensions externes d'une plaque de microtitration et un dispositif de mesure de la température des incubateurs de plaques de microtitration.

22. Trousse de test permettant de réaliser le procédé selon une ou plusieurs des revendications 1 à 16 et/ou dans un système selon une ou plusieurs des revendications 17 à 21, **caractérisé en ce qu'**elle comprend au moins une solution de test, définie en concentration et en absorption optique, d'un indicateur chromophore avec des ions qui génèrent, par complexion avec un ligand spécifique, la coloration de l'échantillon.

23. Trousse de test selon la revendication 22, **caractérisée en ce qu'**elle comprend de plus une solution réactionnelle définie avec un ligand chromogène.

24. Trousse de test selon la revendication 22 ou 23, **caractérisée en ce qu'**elle comprend de plus un agent réducteur ou un agent oxydant.

25. Trousse de test selon l'une des revendications 22 à 24, **caractérisée en ce qu'**elle comprend de plus un tampon de diluant et/ou un ligand auxiliaire.

26. Trousse de test selon l'une des revendications 22 à 25, **caractérisée en ce qu'**elle comprend de plus des plaques de microtitration.

27. Trousse de test selon la revendication 26, **caractérisée en ce que** les plaques de microtitration présentent une géométrie sélectionnée ou une propriété de surface sélectionnée.
